# EUROPÄISCHE PATENTSCHRIFT

(11) **EP 1 611 490 B1**
(45) Veröffentlichungstag und Bekanntmachung des Hinweises auf die Patenterteilung: **21.05.2008**
(21) Anmeldenummer: 04715325.9
(22) Anmeldetag: 27.02.2004
(51) Int. Cl.: G05B 19/042, B60G 17/015

(54) **VERFAHREN ZUM VERMEIDEN VON FEHLERHAFTEN AKTUATORZUGRIFFEN IN EINEM MULTIFUNKTIONALEN ELEKTRONISCHEN GESAMTREGELUNGSSYSTEM**
METHOD FOR THE PREVENTION OF ERRONEOUS ACTUATOR ACCESS IN A MULTIFUNCTIONAL GENERAL ELECTRONIC CONTROL SYSTEM
PROCEDE POUR EVITER DES ACCES INCORRECTS A DES ACTIONNEURS DANS UN SYSTEME DE REGULATION GLOBAL ELECTRONIQUE ET MULTIFONCTIONNEL

(30) Priorität: 25.03.2003 DE 10313409
(43) Veröffentlichungstag der Anmeldung: 04.01.2006
(73) Patentinhaber: Continental Teves AG & Co. oHG, 60488 Frankfurt am Main (DE)
(72) Erfinder: KOHL, Andreas, 55126 Mainz (DE); KEBBEL, Christian, 63110 Rodgau (DE)
(86) Internationale Anmeldenummer: PCT/EP2004/050217
(87) Internationale Veröffentlichungsnummer: WO 2004/086157

(56) Entgegenhaltungen:
- DE-A- 10 025 493
- DE-A- 10 132 440
- DE-A- 19 704 841
- DE-A- 19 744 230

## Beschreibung

Die Erfindung bezieht sich auf ein Verfahren zum Vermeiden von fehlerhaften Aktuatorzugriffen in einem multifunktionalen elektronischen Gesamtregelungssystem, bei dem die Aktuatorzugriffsanforderungen von verschiedenartigen Systemdiensten ausgehen. Das Verfahren ist insbesondere für Fahrzeugregelungssysteme geeignet.

Es sind bereits komplexe Kraftfahrzeugregelungssysteme bekannt, die mehrere Funktionen, wie Antiblockierschutz (ABS), Anfahrschlupfregelung (ASR), Fahrstabilitätsregelung (ESP), elektrische Überlagerungslenkung, Bremsassistent, System- oder Komponentendiagnose usw. vereinen. Ein solches System zeigt z.B. die DE 10025493 A1. Es besteht der Wunsch, diese und weitere Funktionen und Hilfsfunktionen, wie Überwachung, Fehlersignalisierung, Reifendrücküberwachung etc., ebenfalls mit Hilfe eines gemeinsamen elektronischen Systems zu steuern. Die verschiedenen Funktionen und Hilfsfunktionen werden dabei zum großen Teil mit Hilfe derselben Aktuatoren, wie Druckregelventilen, Hydraulikpumpen, Warnlampen etc., ausgeführt oder vorbereitet. Die Zugriffe zu den einzelnen Aktuatoren können dabei durchaus gleichzeitig erfolgen. Dies führt verständlicher Weise zu Konflikten. Ein Zugriff zu einem Aktuator durch ein Regelungssystem oder einen Regelungsbefehl untergeordneter Bedeutung anstelle eines z.B. aus Sicherheitsgründen momentan wichtigeren Befehls muss verhindert werden.

Der vorliegenden Erfindung liegt daher die Aufgabe zugrunde sicherzustellen, dass in einem komplexen System der vorgenannten Art bei konkurrierenden Aktuatorzugriffsanforderungen kein "fehlerhafter" , nicht berechtigter Zugriff zu einem Aktuator erfolgt. "fehlerhaft" ist dabei ein Zugriff durch eine Anforderung, die momentan unerwünscht ist, weil eine Arbitrierungsart gefordert wird, die in der aktuellen Betriebsphase nicht zulässig ist (z.B. eine Diagnosemaßnahme während der Fahrt) oder aus zahlreichen anderen Gründen.

Es hat sich herausgestellt, dass diese Aufgabe durch das im Anspruch 1 beschriebene Verfahren gelöst werden kann, dessen Besonderheit darin besteht, dass in das System eine Rechteverwaltung, die bei einer Aktuatorzugriffsanforderung die Berechtigung des Systemdienstes zur Änderung der momentanen Betriebsart des Gesamtregelungssystems feststellt, eine Betriebsartensteuerung und eine Zugriffsverwaltung eingefügt werden, dass die Rechteverwaltung bei einer Zugriffsanforderung durch einen Systemdienst unter Berücksichtigung der momentanen Gesamtbetriebsart des Gesamtregelungssystems eine Einstellung oder einen Wechsel der Betriebsart nach vorgegebenen Regeln herbeiführt und die aktuelle Betriebsart der Zugriffsverwaltung meldet, und dass die Zugriffsverwaltungin Abhängigkeit von der gemeldeten Gesamtbetriebsart eine Aktuatorbetätigung nur durch den "berechtigten" Systemdienst zulässt und die Aktuatorzugriffsanforderungen der Systemdienste nach vorgegebenen Arbitrationsregeln verarbeitet.
Erfindungsgemäß wird also in das elektronische Steuersystem eines multifunktionalen Gesamtregelungssystems eine zusätzliche Rechte- und Zugriffsverwaltung integriert, die dazu führt, dass nur die in der jeweiligen Betriebsart "erwünschten", festen vorgegebenen Regeln entsprechende Zugriffsanforderungen der verschiedenen oder verschiedenartigem Systemdienste zum Aktuator durchgelassen werden. Den z.B. aus Sicherheitsgründen vorzuziehenden Aktionen wird von der Zugriffsverwaltung Vorrang oder Priorität eingeräumt.

Durch die erfindungsgemäße Rechte- und Zugriffsverwaltung wird es möglich, Basisfunktionen und Hilfs- oder Fremdfunktionen in einem System zu integrieren, ohne die Basisfunktionen zu gefährden. Durch die Rechte- und Zugriffsverwaltung wird verhindert, dass z.B. durch einen "fehlerhaften", nicht berechtigten Zugriff auf einen Aktuator eine Bremsbetätigungsanforderung, die aus Sicherheitsgründen Vorrang haben muss, nicht mehr durchgeschaltet werden kann. Die Erfindung macht es also erst möglich, dass zahlreiche wichtigere und - je nach Situation bzw. Betriebsart - weniger wichtige Funktionen integriert werden können.

Nach einem vorteilhaften Ausführungsbeispiel des erfindungsgemäßen Verfahrens werden die Aktuatorzugriffanforderungen der Systemdienste in einem Speicher erfasst und nach Arbitrationsarten getrennt zur Zugriffsverwaltung weitergeleitet.

Eine besonders vorteilhafte Ausführungsart der Erfindung besteht, dass die zu einem Aktuator durchgelassene, von einem Systemdienst ausgehende Aktuatorzugriffsanforderung durch zweistufige Arbitration, nämlich durch eine "vertikale" und eine "horizontale" Arbitration, bestimmt wird.

Nach einem weiteren Ausführungsbeispiel der Erfindung werden in der Zugriffsverwaltung in einem ersten Schritt die nicht berechtigten Zugriffsanforderungen in Abhängigkeit von der gemeldeten, aktuellen Gesamtbetriebsart ermittelt, eliminiert oder zurückgewiesen werden. In einem zweiten Schritt wird durch vertikale Arbitration eine Bewertung und Auswahl der berechtigten Zugriffsanforderungen nach vorgegebener Rangfolge der Arbitrationsarten durchgeführt, wobei einem "Stromsignal" höhere Priorität als einem "Drucksignal" und einem "EIN/AUS-Signal" höhere Priorität als einem Stromsignal zugemessen werden. Schließlich erfolgt in einem dritten Schritt durch horizontale Arbitration eine Bewertung und Auswahl der in dem zweiten Schritt ermittelten Zugriffsanforderungen nach Priorität des Signals, mit dem der ausgewählte Systemdienst den Aktuator ansteuern will.

Es ist zweckmäßig, die Rechte der Systemdienste zur Änderung der Betriebsart in einem Festwertspeicher, auf den die Rechteverwaltung Zugriff hat, z.B. in Form einer Tabelle, festzuhalten.

Wird das erfindungsgemäße Verfahren bei einem Gesamtregelungssystem für Kraftfahrzeuge angewendet, das als Basissystem eine Bremsanlage (EHB, EMB) enthält, werden als Systemdienste, von denen Aktuatorzugriffsanforderungen ausgehen, die Basisbremsfunktionen (BBF), Radschlupfregelungsfunktionen (wie ABS, ASR(TCS),ESP), Diagnosefunktionen (DIAG), Motorpumpenregelungensysteme (MPA) und Schnittstellen (BUS) erfasst und durch die Rechteverwaltung in Verbindung mit der Zugriffsverwaltung kontrolliert.

Es können noch weitere Systemdienste, wie "Fremdsoftware", (CSW) "Lenkungsfunktionen" (Lenk) etc., in das Gesamtsystem integriert werden.

Bei einem Gesamtregelungssystem für Kraftfahrzeuge wird vorteilhafter Weise in der Betriebartensteuerung zumindest zwischen den Betriebsarten "Normalbetrieb", der sich nach Beendigung der Startphase beim Ausbleiben einer Fehlermeldung einstellt, der Betriebsart "Startphase", die z.B. bis zum Ablauf einer vorgegebenen Zeitspanne, bis zum erstmaligem Erreichen einer Mindestgeschwindigkeit und/oder bis zum Abschluss von anfänglichen Prüfroutinen gilt, der Betriebsart "Diagnose", der Betriebsart "Fremdsoftware", die bei einer Aktuatorzugriffsanforderung durch ein Fremd- oder Hilfssystem ausgelöst wird, und der Betriebsart "Failsafe", die auf das Vorliegen einer Fehlermeldung hinweist, unterschieden.

Weitere Merkmale, Vorteile und Anwendungsmöglichkeiten der Erfindung gehen aus der folgenden Beschreibung von Einzelheiten eines Ausführungsbeispiels anhand der beigefügten Zeichnung hervor. Es zeigen
- Fig. 1: in schematischer Darstellung Funktionselemente eines elektronischen Gesamtregelungssystems zur Ausführung des erfindungsgemäßen Verfahrens und
- Fig. 2: ebenfalls in schematischer Darstellung einen Teil des Gesamtregelungssystems nach Fig. 1 zur Veranschaulichung der Funktionsweise der Zugriffsverwaltung.

Das im folgenden als vereinfachtes Beispiel beschriebene Gesamtregelungssystem ist für ein Kraftfahrzeug mit einer komplexen Bremsanlage, wie einem elektrohydraulischen Bremsensystem (EHB) vorgesehen, das mit Systemen und Funktionen unterschiedlicher Art, wie Bremsassistent, Geschwindigkeits- oder Abstandregelungssystemen, Diagnosesystemen, Lenksystemen (z.B. Überlagerungslenkung) etc. zusammenarbeiten kann. Das Bremsensystem, einschließlich der zugehörigen Regelungssysteme und -funktionen ABS, ASR, ESP etc. wird als Basissystem betrachtet, die übrigen Systeme oder Funktionen als Fremd- oder Hilfssysteme.

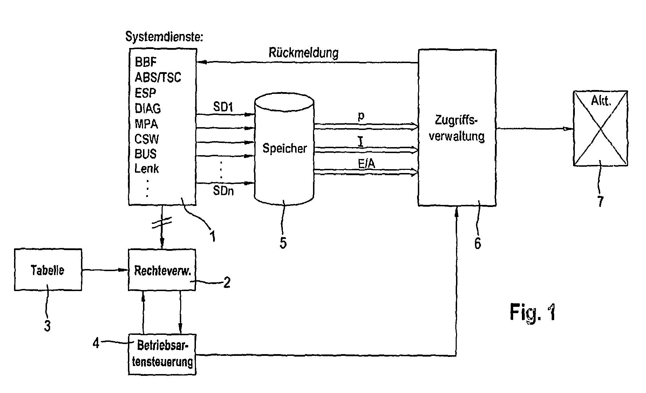

In Fig. 1 werden die Dienste, von denen Aktuatorzugriffsanforderungen ausgehen, die nach dem erfindungsgemäßen Verfahren "verwaltet", d.h. auf ihre Berechtigung geprüft werden, durch einen Funktionsblock 1 symbolisch dargestellt. In dem hier beschriebenen Ausführungsbeispiel nach der Erfindung handelt es sich, wie in 1 angedeutet, im wesentlichen um die folgende Dienste:

| | |
|---|---|
| BBF | bezeichnet die Basisbremsfunktion, die z.B. bei Brake-By-Wire-Systemen (EHB; EMB) auch in Standardsituationen elektronische Steuerung verlangt; |
| ABS, ASR(TCS), ESP | sind unter diesen Abkürzungen bekannte Regelungsfunktionen; |
| DIAG | bezeichnet Diagnosefunktionen; |
| MPA | ist die Bezeichnung für ein Motorpumpenaggregat, vom dem ebenfalls Aktuatorzugriffsanforderungen ausgehen; |
| CSW | symbolisiert Fremd- oder Hilfssysteme (CSW = Customer Software); |
| BUS | bezeichnet eine Schnittstelle, wie CAN-Bus, über die u.a. auch Zugriffsanforderungen von Zubehörfunktionen oder von Fremdsystemen (CSW) geleitet werden; |
| Lenk | bezeichnet Lenksysteme, wie Überlagerungslenkungen. |

Zugriffsanforderungen von Abstandsregelungssystemen (ACC), Geschwindigkeitsregelungssystemen (Tempomat) etc. können ebenfalls über den Systemdienst "BUS", über die Schnittstelle CSW oder über einen weiteren Systemdienst mit eigener Identität (ID) in das Gesamtregelungssystem integriert werden.

Die von den Systemdiensten 1 ausgehenden Aktuatorzugriffsanforderungen werden in einer Rechteverwaltung 2 auf Zulässigkeit oder Berechtigung in der aktuellen Situation, d.h. in der momentanen Betriebsart (Gesamtbetriebsart), überprüft. Hierzu dient eine Rückmeldung aus einer Betriebsartensteuerung 3.

Jeder Dienst wird durch seine ID eindeutig erkannt. Als Betriebsarten, die unterschiedliche Reaktionen verlangen, sind beispielsweise die folgenden von Bedeutung:

| | |
|---|---|
| "Normal" | "Normal-Betrieb" ist z.B. nach längerer Betriebszeit eines Kraftfahrzeugs ohne Fehlermeldung gegeben; |
| "Start-Phase" | gilt z.B. solange die einzelnen Systeme noch nicht voll in Funktion sind oder Routineüberprüfungen noch nicht abgeschlossen sind; |
| "Diagnose" | diese Betriebsart herrscht z.B. in der Werkstatt oder in der Startphase des KFZ während des Ablaufs von Prüfroutinen; |
| "CSW" | Fremdsoftware: diese Betriebsart wird z.B. eingestellt, wenn die ID des den Zugriff anfordernden Systemdienstes erkennen lässt, dass die Anforderung nicht von einer Basisfunktion, sondern von einer Zubehör- bzw. Hilfsfunktion oder "Fremdfunktion" stammt; |
| "Failsafe" | im System wurde ein Fehler erkannt, der Betriebseinschränkungen zur Folge hat. |

Die Regeln zur Beurteilung der "Berechtigung" in Abhängigkeit von dem identifizierten Systemdienst und von der aktuellen Betriebsart (Gesamtbetriebsart) sind fest vorgegeben. Die Regeln sind, wie Fig. 1 zeigt, in dem beschriebenen Ausführungsbeispiel der Erfindung in einem Festwertspeicher 3, z.B. tabellarisch, festgehalten.

Die Zugriffsanforderung des jeweiligen Systemdienstes 1 wird von der Rechteverwaltung 2 sofort abgelehnt oder ignoriert, wenn in der aktuellen Gesamtbetriebsart keine Berechtigung zu der Aktuatorzugriffsanforderung gegeben ist. Wenn die Anforderung in der aktuellen Betriebsart "berechtigt" ist, wird durch die Betriebsartensteuerung 4, falls erforderlich, ein Wechsel der Betriebsart des Gesamtregelungssystems herbeigeführt. Die aktuelle Betriebsart wird einer Zugriffsverwaltung 6 gemeldet; außerdem erfolgt eine Rückmeldung an die Rechteverwaltung 2.

Die Aktuatorzugriffsanforderungen der einzelnen Systemdienste 1 werden über die Signalwege SD1 bis SDn, gleichzeitig mit der Rechteüberprüfung in der Rechteverwaltung 2, über einen Zwischenspeicher 5 der Zugriffsverwaltung 6 zugeführt, die nach vorgegebenen Regeln durch Arbitration gesteuert festlegt, welche Aktuatorzugriffsanforderung der Systemdienste 1 in der aktuellen Betriebsart tatsächlich bis zu einen Aktuator 7 durchgelassen wird. Alle anderen Anforderungen werden ignoriert oder wegen "fehlender Berechtigung" zurückgewiesen; die Akzeptanz und/oder die "Ablehnung" der Anforderung wird den Systemdiensten 1 zurückgemeldet.

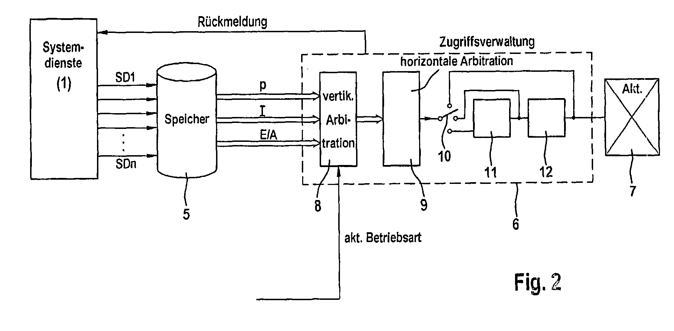

Wie Fig. 2 veranschaulicht, werden in dem Zwischenspeicher 5 die Aktuatorzugriffsanforderungen nach Arbitrationsarten, d.h. nach Signalen gleicher physikalischer Einheit (hier: Druck "p", Strom "I" oder EIN/AUS-Signal "E/A"), sortiert und zur Zugriffsverwaltung weitergeleitet.

In der Zugriffsverwaltung 6 werden in einem ersten Schritt die in der aktuellen Gesamtbetriebart "nicht berechtigten" Anforderungen zurückgewiesen oder eliminiert. Sodann findet eine zweistufige Arbitration der verbliebenen Aktuatorzugriffsanforderungen statt. In einer ersten Stufe, symbolisiert durch einen Block 8 in Fig. 2, werden die "berechtigten" Anforderungen nach vorgegebener Rangfolge oder Prioritätsrang der einzelnen Arbitrationsarten bewertet; dies wird als "vertikale" Arbitration bezeichnet.

Anschließend wird in einem zweiten Schritt oder einer zweiten Stufe 9 durch "horizontale" Arbitration eine Bewertung der verbleibenden Anforderungen gleicher Arbitrationsart getroffen und festgelegt, welche der Aktuatorzugriffsanforderungen tatsächlich bis zu dem Aktuator 7 durchgelassen wird. Symbolisiert durch einen Umschalter 10 wird das Ausgangssignal der Stufe 9 - je nach Arbitrationsart, d.h. hier "Druck", "Strom" oder "EIN/AUS"-Signal - direkt oder nach Weiterverarbeitung in einem Druckregler 11 und/oder in einem Stromregler 12 zu dem Aktuator 6 weitergeleitet. 9

In dem hier beschriebenen Ausführungsbeispiel der Erfindung ist der Aktuator 7 eine Spule, z.B. die Ventilspule eines Bremsdrucksteuerventils. Ein Befehl oder Signal der Einheit oder Dimension "EIN/AUS" führt unmittelbar zur Reaktion des Ventils. Dem "EIN/AUS"-Signal wird daher im Sinne der horizontalen Arbitration die "höchste" Priorität eingeräumt. Ein Signal der Einheit oder Dimension "Strom" muss dagegen zunächst in einem Stromregler 12 (siehe Fig. 2) ausgewertet und in einen "EIN/AUS"-Befehl umgewandelt werden. Eine Druckänderungsanforderung, also ein Signal der Dimension "Druck", muss zunächst in einem Druckregler 11 in eine Stromänderungsanforderung und danach mit Hilfe des Stromreglers 12 in ein Aktuatorbetätigungssignal bzw. in ein "EIN/AUS"-Signal gewandelt werden. Ein Signals der Dimension "Strom" genießt daher im vorliegenden Ausführungsbeispiel eine höhere Priorität als ein Signal der Dimension "Druck". Bei konkurrierenden Signalen der Dimension "Druck", "Strom" und "EIN/AUS" gelangt das E/A-Signal zur Ausführung; fehlt ein E/A-Signal, wird das Strom-Signal vorgezogen.

Die Zugriffsverwaltung 6 selektiert die Aktuatorzugriffsanforderungen nach vorgegebenen Regeln in Abhängigkeit von der aktuellen Betriebsart. Beispielsweise sind in der Betriebsart "Normal" nur Druck-Sollwertanforderungen "rechtmäßig" und werden ausgewertet; andere Anforderungen werden von der Zugriffsverwaltung 6 zurückgewiesen oder ignoriert. In der Betriebsart "Fremdsoftware" (CSW) sind nur Stellbefehle bzw. Aktuatcrzugriffsanforderungen in Form von Drucksignalen erlaubt. In der Betriebsart "Diagnose" sind Stellbefehle in Form von Stromsignalen oder Ventil-Schaltbefehlen, nicht jedoch von Drucksignalen zulässig. In der Betriebsart "Failsafe" sind nur Aktuatoranforderungen, die von dem Kernsystem ausgehen, zu dem vor allem die sicherheitskritischen Systemdienste gehören, nicht jedoch Aktuatoranforderungen von Zubehörsystemen, Hilfssystemen oder Fremdsystemen (CSW) "rechtmäßig".

Dies sind nur relativ einfache Beispiele. Eine Vielzahl weiterer Vorgaben lässt sich mit Hilfe der Zugriffsverwaltung 6 in Verbindung mit der Rechteverwaltung 2 (3) realisieren.

## Patentansprüche

1. Verfahren zum Vermeiden von fehlerhaften Aktuatorzugriffen in einem multifunktionalen elektronischen Gesamtregelungssystem, bei dem die Aktuatorzugriffsanforderungen von verschiedenen oder verschiedenartigen Systemdiensten (1) ausgehen, **dadurch gekennzeichnet, dass** in das System eine Rechteverwaltung (2), die bei einer Aktuatorzugriffsanforderung die Berechtigung des Systemdienstes (1) zur Änderung der momentanen Betriebsart des Gesamtregelungssystems feststellt, eine Betriebsartensteuerung (4) und eine Zugriffsverwaltung (6) eingefügt werden, dass die Rechteverwaltung (2) bei einer Zugriffsanforderung durch einen Systemdienst (1) unter Berücksichtigung der momentanen Gesamtbetriebsart des Gesamtregelungssystems eine Einstellung oder einen Wechsel der Betriebsart nach vorgegebenen Regeln herbeiführt und die aktuelle Betriebsart der Zugriffsverwaltung (6) meldet, und dass die Zugriffsverwaltung (6) in Abhängigkeit von der gemeldeten Gesamtbetriebsart eine Aktuatorbetätigung nur durch den "berechtigten" Systemdienst (1) zulässt und die Aktuatorzugriffsanforderungen der Systemdienste (1) nach vorgegebenen Arbitrationsregeln verarbeitet.

2. Verfahren nach Anspruch 1, **dadurch gekennzeichnet, dass** die Aktuatorzugriffanforderungen der Systemdienste (1) in einem Speicher (5) erfasst und nach Arbitrationsarten sortiert zur Zugriffsverwaltung (6) weitergeleitet werden.

3. Verfahren nach Anspruch 1 oder 2, **dadurch gekennzeichnet, dass** die zu einem Aktuator (7) durchgelassene, von einem Systemdienst (1) ausgehende Aktuatorzugriffsanforderung durch zweistufige Arbitration, nämlich durch eine "vertikale" und eine "horizontale" Arbitration, bestimmt wird.

4. Verfahren nach einem oder mehreren der Ansprüche 1 bis 3 2, **dadurch gekennzeichnet, dass** in der Zugriffsverwaltung (6) in einem ersten Schritt die nicht berechtigten Zugriffsanforderungen in Abhängigkeit von der gemeldeten, aktuellen Gesamtbetriebsart ermittelt, eliminiert oder zurückgewiesen werden, dass in einem zweiten Schritt durch vertikale Arbitration eine Bewertung und Auswahl der berechtigten Zugriffsanforderungen nach vorgegebener Rangfolge der Arbitrationsarten durchgeführt wird, wobei einem "Stromsignal" höhere Priorität als einem "Drucksignal" und einem "EIN/AUS-Signal" höhere Priorität als einem "Stromsignal" zugemessen wird, und dass in einem dritten Schritt durch horizontale Arbitration eine Bewertung und Auswahl der in dem zweiten Schritt ermittelten Zugriffsanforderungen nach Priorität des Signals für die Ansteuerung des Aktuators (7) erfolgt.

5. Verfahren nach einem oder mehreren der Ansprüche 1 bis 4, **dadurch gekennzeichnet, dass** die Rechte der Betriebsdienste (1) zur Änderung der Betriebsart in einem Festwertspeicher (3), auf den die Rechteverwaltung (2) Zugriff hat, festgehalten werden.

6. Verfahren nach einem oder mehreren der Ansprüche 1 bis 5, **dadurch gekennzeichnet, dass** bei einem Gesamtregelungssystem für Kraftfahrzeuge, das als Basissystem eine Bremsanlage (EHB,EMB) enthält, als Systemdienste (1), von denen die Aktuatorzugriffsanforderungen ausgehen, die Basisbremsfunktionen (BBF), Radschlupfregelungsfunktionen (wie ABS, ASR(TCS),ESP), Diagnosefunktionen (Diag), Motorpumpenregelungensysteme (MPA) und Schnittstellen (BUS) erfasst und durch die Rechteverwaltung (2) in Verbindung mit der Zugriffsverwaltung (5) kontrolliert werden.

7. Verfahren nach einem oder mehreren der Ansprüche 1 bis 6, **dadurch gekennzeichnet, dass** weitere Systemdienste (1), wie "Fremdsoftware" (CWS), "Lenkungsfunktionen" (Lenk), etc. in das Gesamtsystem integriert werden.

8. Verfahren nach einem oder mehreren der Ansprüche 1 bis 7, **dadurch gekennzeichnet, dass** bei einem Gesamtregelungssystem für Kraftfahrzeuge in der Betriebartensteuerung (3) zumindest zwischen den Betriebsarten "Normalbetrieb", der sich nach Beendigung der Startphase beim Ausbleiben einer Fehlermeldung einstellt, der Betriebsart "Startphase", die z.B. bis zum Ablauf einer vorgegebenen Zeitspanne, bis zum erstmaligem Erreichen einer Mindestgeschwindigkeit und/oder bis zum Abschluss von anfänglichen Prüfroutinen gilt, der Betriebsart "Diagnose", der Betriebsart "Fremdsoftware", die bei einer Aktuatorzugriffsanforderung durch ein Fremd- oder Hilfssystem ausgelöst wird, und der Betriebsart "Failsafe", die auf das Vorliegen einer Fehlermeldung hinweist, unterschieden wird.

## Claims

1. A method for the prevention of erroneous actuator access operations in a multifunctional general electronic control system wherein the actuator access requirements emanate from various or different system services (1), **characterized in that** a rights management (2) which determines the authorization of the system service (1) for changing the instantaneous mode of operation of the general control system in the event of an actuator access requirement, a mode of operation control unit (4), and an access management (6) are integrated into the system, **in that** the rights management (2) in the event of an access requirement by a system service (1) brings about an adjustment or a change of the mode of operation according to predefined rules in consideration of the instantaneous general mode of operation of the general control system and reports the current mode of operation to the access management (6), and **in that** the access management (6), depending on the reported general mode of operation, allows an actuator actuation only by the 'authorized' system service (1) and processes the actuator access requirements of the system services (1) according to predefined arbitration rules.

2. The method as claimed in claim 1,
**characterized in that** the actuator access requirements of the system services (1) are recorded in a memory (5) and passed on to the access management (6) sorted according to types of arbitration.

3. The method as claimed in claim 1 or 2,
**characterized in that** the actuator access requirement originating from a system service (1) and admitted to pass to an actuator (7) is determined by a two-stage arbitration, i.e. by a 'vertical' and a 'horizontal' arbitration.

4. The method as claimed in any one or more of claims 1 to 3, **characterized in that** in the access management (6), the unauthorized access requirements are determined, eliminated or rejected in a first step depending on the reported, current general mode of operation, **in that** in a second step, vertical arbitration is used to evaluate and select the authorized access requirements according to a predefined order of priority of the types of arbitration, and higher priority is given to a 'current signal' rather than to a 'pressure signal', while higher priority is attributed to an 'ON/OFF signal' rather than to a 'current signal', and **in that** in a third step, horizontal arbitration is used to evaluate and select the access requirements determined in the second step according to the priority of the signal for driving the actuator (7).

5. The method as claimed in any one or more of claims 1 to 4, **characterized in that** the rights of the system services (1) for the change of the mode of operation are written down in a read-only memory (3) to which the rights management (2) has access.

6. The method as claimed in any one or more of claims 1 to 5, **characterized in that** in a general control system for motor vehicles which, as a base system, comprises a brake system (EHB, EMB), as system services (1) emanating from which are the actuator access requirements, the basic brake functions (BBF), wheel slip control functions (such as ABS, TCS, ESP), diagnosis functions (DIAG), motor pump control systems (MPA) and interfaces (BUS) are determined and checked by the rights management (2) in connection with the access management (5).

7. The method as claimed in any one or more of claims 1 to 6, **characterized in that** further system services (1) such as 'customer software' (CSW), 'steering functions' (steer), etc., are integrated into the general system.

8. The method as claimed in any one or more of claims 1 to 7, **characterized in that** in a general control system for motor vehicles, a distinction is made in the mode of operation control unit (3) at least between the modes of operation 'normal operation' which occurs after termination of the starting phase in the absence of an error message, the mode of operation 'starting phase' which applies e.g. until expiry of a predetermined period of time, until a minimum speed is reached for the first time, and/or until initial testing routines are completed, the mode of operation 'diagnosis', the mode of operation 'customer software' which is initiated in the case of an actuator access requirement by an extraneous or auxiliary system, and the mode of operation 'failsafe' indicating the presence of an error message.

## Revendications

1. Procédé pour éviter des accès incorrects à des actionneurs dans un système de régulation global électronique et multifonctionnel, dans lequel les demandes d'accès aux actionneurs partent de différents services (1) du système ou de services de types différents, **caractérisé en ce que** dans le système sont insérées une gestion des droits (2) qui constate, lors d'une demande d'accès aux actionneurs, la justification du service (1) du système pour modifier le mode de fonctionnement actuel du système de régulation global, une commande du mode de fonctionnement (4) et une gestion d'accès (6), **en ce que** la gestion des droits (2) entraîne, lors d'une demande d'accès par un service (1) du système, en tenant compte du mode actuel de fonctionnement global du système de régulation global, un réglage ou un changement du mode de fonctionnement selon des règles prédéfinies, et signale le mode actuel de fonctionnement à la gestion d'accès (6), et **en ce que** la gestion d'accès (6) autorise, en fonction du mode de fonctionnement global signalé, un actionnement de l'actionneur uniquement par le service (1) du système "autorisé", et traite les demandes d'accès aux actionneurs des services (1) du système selon des règles d'arbitrage prédéfinies.

2. Procédé selon la revendication 1, **caractérisé en ce que** les demandes d'accès aux actionneurs des services (1) du système sont relevées dans une mémoire (5) et transmises, triées selon les modes d'arbitrage, à la gestion d'accès (6).

3. Procédé selon la revendication 1 ou 2, **caractérisé en ce que** la demande d'accès aux actionneurs, partant d'un service (1) du système, et laissée passer vers un actionneur (7), est déterminée par un arbitrage à deux étages, à savoir par un arbitrage "vertical" et un arbitrage "horizontal".

4. Procédé selon une ou plusieurs des revendications 1 à 3, **caractérisé en ce que** dans la gestion d'accès (6), au cours d'une première étape, les demandes d'accès non autorisées sont déterminées, éliminées ou rejetées en fonction du mode actuel signalé de fonctionnement global, **en ce qu'**au cours d'une deuxième étape, par arbitrage vertical, il est procédé à une évaluation et une sélection des demandes d'accès autorisées selon une priorité prédéfinie des modes d'arbitrage, à un "signal de courant" étant attribuée une priorité supérieure à un "signal de pression" et à un "signal MARCHE/ARRET" étant attribuée une priorité supérieure à un "signal de courant", et **en ce qu'**au cours d'une troisième étape, par arbitrage horizontal, il est procédé à une évaluation et une sélection des demandes d'accès, déterminées au cours de la deuxième étape, suivant la priorité du signal pour la commande de l'actionneur (7).

5. Procédé selon une ou plusieurs des revendications 1 à 4, **caractérisé en ce que** les droits des services (1) de fonctionnement pour la modification du mode de fonctionnement sont consignés dans une mémoire morte (3) à laquelle a accès la gestion des droits (2).

6. Procédé selon une ou plusieurs des revendications 1 à 5, **caractérisé en ce que** dans le cas d'un système de régulation global pour véhicule automobile, qui contient comme système de base un système de freinage (EHB, EMB), en tant que services (1) du système, desquels partent les demandes d'accès aux actionneurs, les fonctions de freinage de base (BBF), les fonctions de régulation du patinage de roue (telles que ABS, ASR (TCF), ESP), les fonctions de diagnostic (Diag), les systèmes de régulation des motopompes (MPA) et interfaces (BUS) sont relevés et contrôlés par la gestion des droits (2) en liaison avec la gestion d'accès (5).

7. Procédé selon une ou plusieurs des revendications 1 à 6, **caractérisé en ce que** d'autres services (1) du système, tels que "logiciel externe" (CWS), "fonctions de direction" (Lenk), etc. sont intégrés dans le système global.

8. Procédé selon une ou plusieurs des revendications 1 à 7, **caractérisé en ce que** dans le cas d'un système de régulation global pour véhicule automobile, on distingue dans la commande de mode de fonctionnement (3) au moins entre les modes de fonctionnement "fonctionnement normal" qui s'établit à la fin de la phase de démarrage en l'absence d'une signalisation de défaut, le mode de fonctionnement "phase de démarrage" qui est par exemple valable jusqu'à l'expiration d'un intervalle de temps prédéfini, jusqu'à ce que soit atteinte pour la première fois une vitesse minimale et/ou jusqu'à la conclusion de routines de vérification initiales, le mode de fonctionnement "diagnostic", le mode de fonctionnement "logiciel externe" qui est déclenché lors d'une demande d'accès aux actionneurs par un système externe ou système auxiliaire, et le mode de fonctionnement "Failsafe" qui indique la présence d'une signalisation de défaut.
